# EUROPEAN PATENT APPLICATION

(11) **EP 2 239 123 A1**
(43) Date of publication of application: **13.10.2010**
(21) Application number: 10159168.3
(22) Date of filing: 06.04.2010
(51) Int. Cl.: B29C 45/14

(54) **Decorated molded surface**

(30) Priority: 06.04.2009 CN 200910301363
(71) Applicant: Hon Hai Precision Industry Co., Ltd., Tu-cheng City, Taipei Hsien (TW)
(72) Inventor: Chang, Chun-Yuan, Taipei Hsien (TW); Huang, Chun-Yi, Taipei Hsien (TW)
(74) Representative: Gray, John James

(57) **Abstract**

A method is provided for manufacturing a molded product (30) with a three-dimensional (3D) surface. A film (21) is provided and shaped (204) according to the 3D surface of the molded product. The film includes an attached portion (21) covering an outer surface of the molded product and a cover portion (22) covering an edge of the molded product.

## Description

### BACKGROUND

### 1. Technical Field

The disclosure relates to molded products and in particular to decorating molded surfaces, and a method of manufacturing the molded product.

### 2. Description of Related Art

It is difficult to paint different patterns or characters on the edges of a molded product, and consequently, the edges of electronic device enclosures having 3D surfaces are plain and unattractive.

### BRIEF DESCRIPTION OF THE DRAWINGS

FIG. 1 is a flowchart of an embodiment of a method for manufacturing a molded product.

FIG. 2 is a sketch view showing a process of forming a film of the molded product manufactured by the embodiment of the method in FIG. 1.

FIG. 3 is a cross-sectional view of an injection mold and the shaped film of FIG. 2, showing the injection mold open.

FIG. 4 is similar to FIG. 3, but showing the injection mold closed.

FIG. 5 is similar to FIG. 4, but showing an injection state of the injection mold.

FIG. 6 is a cross-sectional view of the molded product manufactured by the embodiment of the method in FIG. 1.

FIG. 7 is a cross-sectional view of a first exemplary embodiment of the film of FIG. 2.

FIG. 8 is a cross-sectional view of a second exemplary embodiment of the film of FIG. 2.

### DETAILED DESCRIPTION

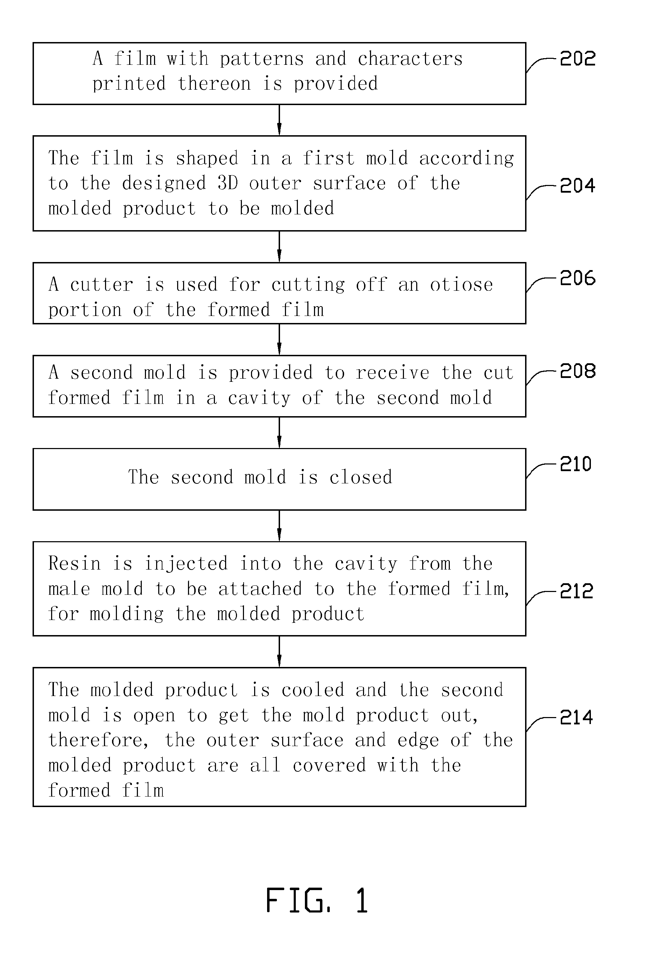

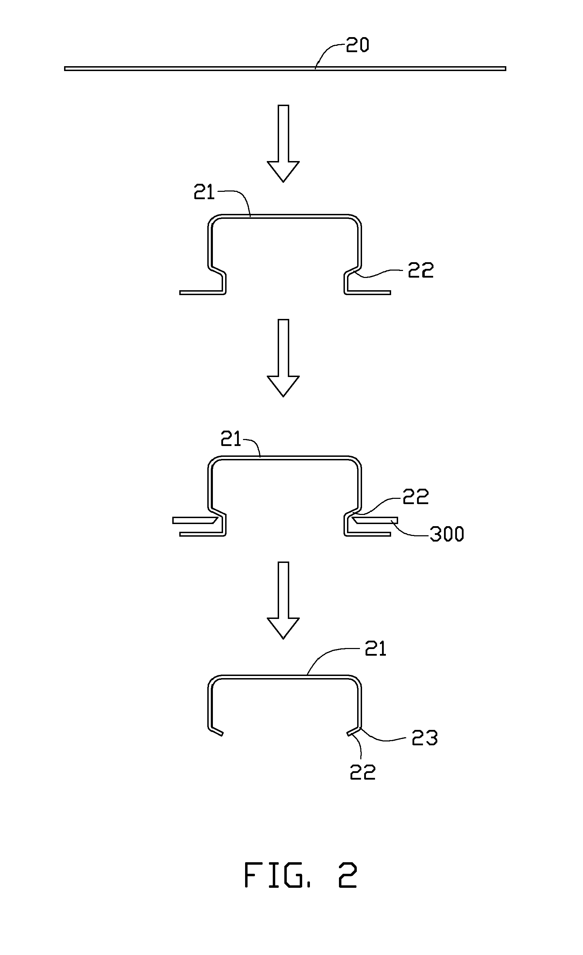

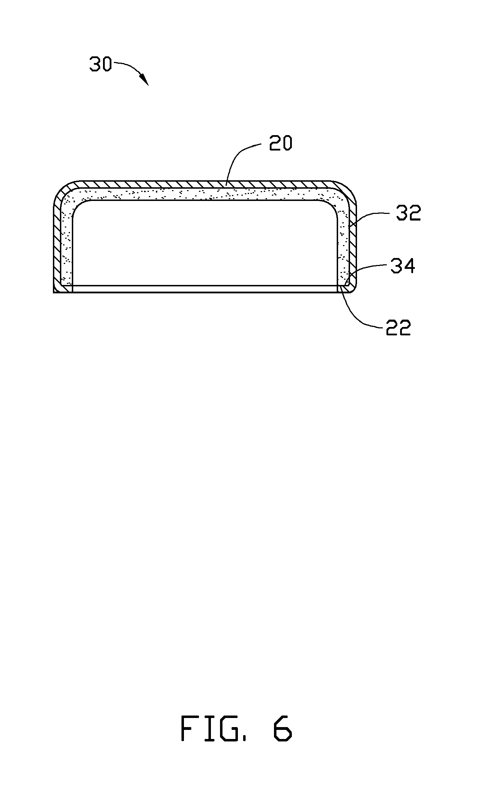

Referring to FIG. 1 to FIG. 2, an embodiment of a method utilized in manufacturing a molded product 30 (shown in FIG. 6) having a three-dimensional (3D) outer surface 32 decorated with patterns and/or symbols, such as characters. The method includes the following steps.

Step 202, a film 20 with patterns and characters printed thereon is provided.

Step 204, the film 20 is shaped in a first mold according to the designed 3D outer surface 32 of the molded product 30 to be molded. The shaped film 20 includes an attached portion 21 to be attached to the 3D outer surface 32 of the molded product 30 and a cover portion 22 extending inward slantingly from an edge of the attached portion 21 for covering an edge 34 of the molded product 30. A connecting portion 23 is formed between the cover portion 22 and the attached portion 21.

Step 206, a cutter 300 is used for cutting off an otiose portion of the shaped film 20 along an edge of the cover portion 22 away from the attached portion 21, according to an edge 34 of the molded product 30. In one embodiment, the edge 34 may be slantingly or perpendicularly connected to an edge of the outer surface 32 of the molded product 30.

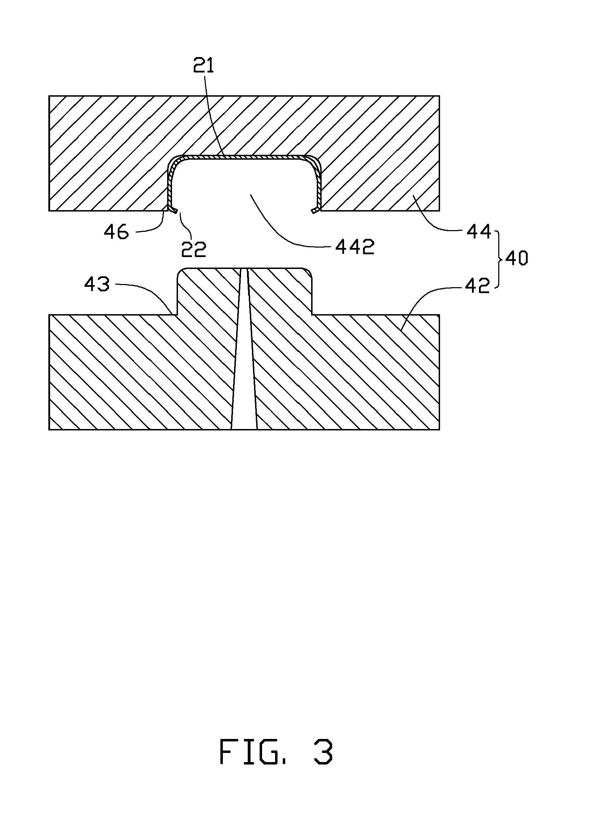

Step 208, referring to FIG. 3, a second mold 40 is provided to receive the cut shaped film 20. The second mold 40 includes a male mold 42 and a female mold 44. The female mold 44 defines a cavity 442. The cut shaped film 20 is set in the cavity 442, with the connecting portion 23 between the cover portion 22 and the attached portion 21 being adjacent to a parting surface 46 of the female mold 44 facing the male mold 42.

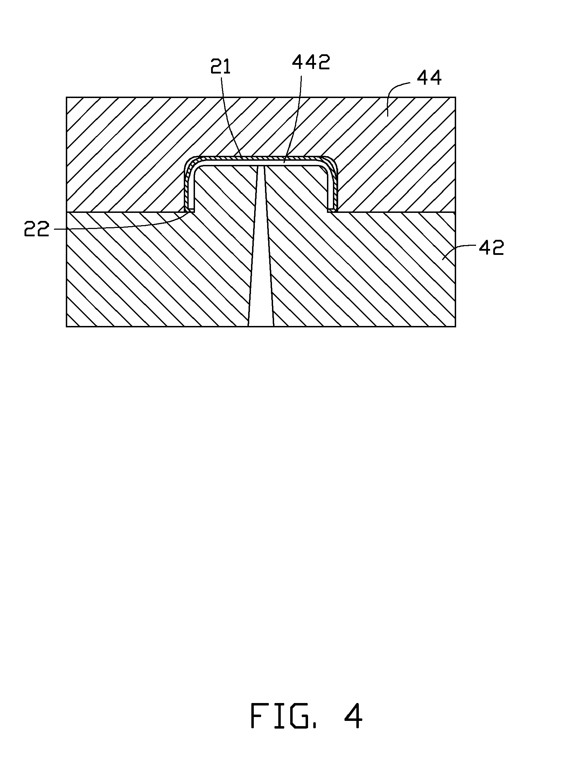

Step 210, referring to FIG. 4, the second mold 40 is closed. A parting surface 43 of the male mold 42 presses the cover portion 22 to rotate toward the cavity 442 around the connecting portion 23 between the cover portion 22 and the attached portion 21. The cover portion 22 is contacted with the parting surface 43 of the male mold 42 when the parting surface 43 of the male mold 42 contacts with the parting surface 46 of the female mold 44.

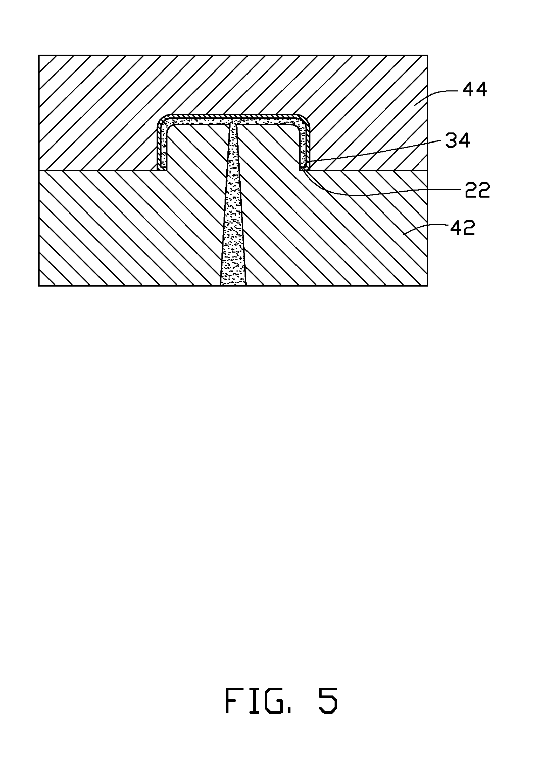

Step 212, referring to FIG. 5, resin is injected into the cavity 442 from the male mold 42 of the second mold 40 to be attached to the shaped film 20, for molding the molded product 30. The outer surface 32 of the molded product 30 is covered with the attached portion 21 of the shaped film 20. The edge 34 of the molded product 30 is covered with the cover portion 22 of the shaped film 20.

Step 214, the molded product 30 is cooled and the second mold 40 is open to get the mold product 30, therefore, the outer surface 32 and edge 34 of the molded product 30 are both covered with the shaped film 20, referring to FIG. 6.

This method can be used for manufacturing the casing of both small and large products such as various parts of mobile phones and notebook computers.

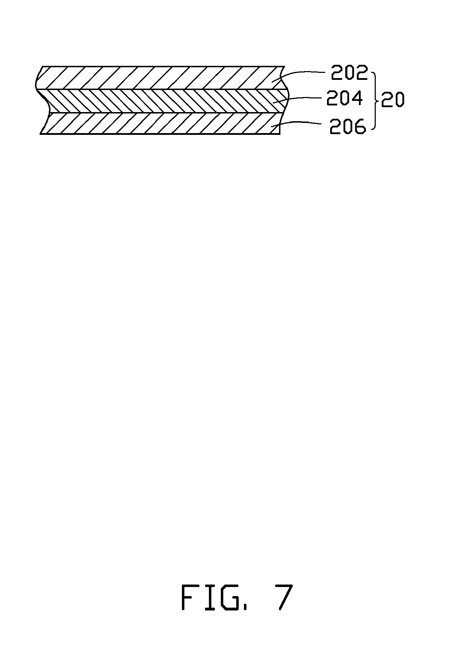

Referring to FIG. 7, in a first embodiment, the film 20 includes a base layer 202, a pattern layer 204 having different patterns and characters and printed on the base layer 202 by printing ink, and an attaching layer 206. The pattern layer 204 is sandwiched between the base layer 202 and the attaching layer 206.

The base layer 202 acts as a scratch/abrasion-resistant for the pattern layer 204. The base layer 202 generally consists of at least polycarbonate, polyethylene terephthalate, acrylic, oriented polypropylene, or polyvinyl chloride, for example. The thickness of the base layer 202 can range from about 0.01 millimeters to about 0.125 millimeters.

A metal decoration layer can also be provided as the pattern layer 204. The metal decoration layer plating may be aluminum, chromium, copper, nickel, indium, and stannum, alone or combined, on the base layer 202 via either a vacuum evaporation or electroplating method.

The attaching layer 206 is used for attaching the film 20 to the outer surface 32 of the molded product 30. The attaching layer 206 may be made from a plurality of resin materials consisting of acrylic, nitrification fiber, polyamine formate, chlorination rubber, vinyl chloride-co-vinyl-acetic ester copolymer, polyamide, polyester, epoxy, polycarbonate, olefin, and acrylonitrile-butylene-styrene monomer resin, for example. The attaching layer 206 is generally provided via concave, screen, and offset printing, or spraying, dip-coating method, or a coating in reverse order method, for example.

The base layer 202 may be either transparent or translucent to illuminate the patterns and/or colors of the pattern layer 204.

In another embodiment, the film 20 includes a base layer 202 and an attaching layer 206, but does not includes a pattern layer 204, for highlighting the natural color of the resin of the molded product 30 through the transparent or translucent base layer 202. It is noteworthy that in other embodiments, the base layer 202 may be made of material with color, for coloring the formed molded product 30.

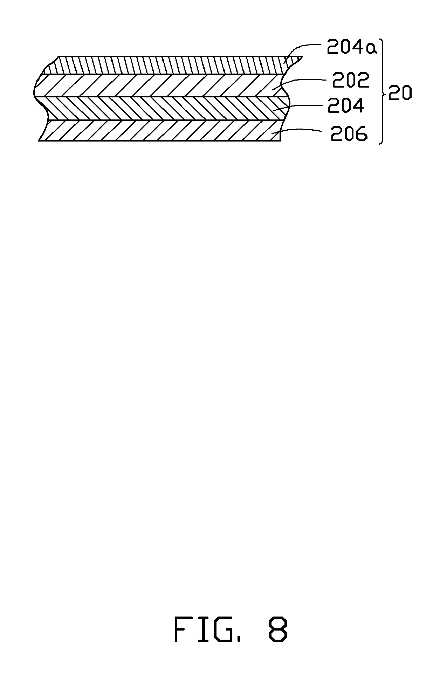

Referring to FIG. 8, in another embodiment of this disclosure, the film 20 includes a base layer 202, a pattern layer 204, an attaching layer 206, and a second pattern layer 204a. The second pattern layer 204a is attached to the base layer 202 opposite to the pattern layer 204.

It is believed that the present embodiments and their advantages will be understood from the foregoing description, and it will be apparent that various changes may be made thereto without departing from the spirit and scope of the description or sacrificing all of its material advantages, the examples hereinbefore described merely being exemplary embodiments.

## Claims

1. A method for forming a molded product with a three-dimensional (3D) surface, the method comprising:
providing a film;
shaping the film according to the 3D surface of the molded product to get a shaped film, the shaped film comprising an attached portion to be attached to the 3D surface of the molded product, a cover portion extending inward slantingly from an edge of the attached portion for covering an edge of the molded product and a connecting portion between the cover portion and the attached portion;
cutting an otiose portion of the shaped film along an edge of the cover portion away from the attached portion according to the edge of the molded product;
providing a mold, the mold comprising a male mold and a female mold defining a cavity;
placing the shaped film into the cavity of the second mold, with the connecting portion of the shaped film being adjacent to a parting surface of the female mold;
closing the second mold, a parting surface of the male mold pressing the cover portion of the shaped film to rotate toward the cavity around the connecting portion of the shaped film, the cover portion being contacted with the parting surface of the male mold when the parting surface of the male mold contacts with the parting surface of the female mold;
injecting the mold with resin and cooling the mold; and
opening the mold to get the mold product.

2. The method of claim 1, wherein the film comprises a base layer and an attaching layer.

3. The method of claim 2, wherein the film further comprises a pattern layer having patterns and/or characters printed on the base layer and sandwiched between the base layer and the attaching layer.

4. The method of claim 2, wherein the base layer comprises at least polycarbonate, polyethylene terephthalate, acrylic, oriented polypropylene, or polyvinyl chloride.

5. The method of claim 1, wherein the base layer is transparent or translucent to reveal the pattern and/or characters of the pattern layer.

6. The method of claim 1, wherein the film comprises a base layer and an attaching layer, the base layer is transparent or translucent for revealing a natural color of the resin.

7. The method of claim 1, wherein the film comprises a base layer, an attaching layer, a pattern layer having patterns and characters printed on the base layer and sandwiched between the base layer and the attaching layer, and a second pattern layer attached to the base layer opposite to the pattern layer.

8. A molded product, comprising:
a three-dimensional outer surface;
an edge slantingly or generally perpendicularly connected to an edge of the outer surface; and
a film attached to the outer surface and the edge, the film comprising an attached portion covering the outer surface of the molded product and a cover portion covering the edge of the molded product.

9. The molded product of claim 8, wherein the film comprises a base layer and an attaching layer.

10. The molded product of claim 9, wherein the film further comprises a pattern layer having patterns and/or characters printed on the base layer and sandwiched between the base layer and the attaching layer.

11. The molded product of claim 10, wherein the base layer is either transparent or translucent to illuminate the pattern and/or characters of the pattern layer.

12. The molded product of claim 9, wherein the base layer comprises at least polycarbonate, polyethylene terephthalate, acrylic, oriented polypropylene, or polyvinyl chloride.

13. The molded product of claim 8, wherein the film comprises a base layer and an attaching layer, the base layer is either transparent or translucent for highlighting a natural color of the outer surface.

14. The molded product of claim 8, wherein the film comprises a base layer, an attaching layer, a pattern layer having patterns and/or characters thereon and sandwiched between the base layer and the attaching layer, and a second pattern layer attached to the base layer opposite to the pattern layer.
